# EUROPÄISCHE PATENTSCHRIFT

(11) **EP 3 601 686 B1**
(45) Veröffentlichungstag und Bekanntmachung des Hinweises auf die Patenterteilung: **28.04.2021**
(21) Anmeldenummer: 18705397.0
(22) Anmeldetag: 15.02.2018
(51) Int. Cl.: E02F 9/26, G06F 3/01, G09G 5/00, B66C 13/52, B66F 11/04, B66C 13/16, B66C 13/40, B66C 13/46, B66F 9/20, G06F 3/147, G06F 3/041

(54) **VERFAHREN ZUM BEDIENEN EINER ARBEITSMASCHINE MITTELS EINES BERÜHRUNGSEMPFINDLICHEN BILDSCHIRMS, STEUERGERÄT UND BEDIENSYSTEM ZUM BEDIENEN EINER ARBEITSMASCHINE**
METHOD FOR OPERATING A WORK MACHINE BY MEANS OF A TOUCH-SENSITIVE SCREEN, CONTROLLER, AND OPERATING SYSTEM FOR OPERATING A WORK MACHINE
PROCÉDÉ POUR LA COMMANDE D'UNE MACHINE DE TRAVAIL AU MOYEN D'UN ÉCRAN TACTILE, APPAREIL DE COMMANDE ET SYSTÈME DE COMMANDE POUR LA COMMANDE D'UNE MACHINE DE TRAVAIL

(30) Priorität: 21.03.2017 DE 102017204676
(43) Veröffentlichungstag der Anmeldung: 05.02.2020
(73) Patentinhaber: Robert Bosch GmbH, 70442 Stuttgart (DE)
(72) Erfinder: MICHALKE, Gabriele, 71263 Weil der Stadt (DE)
(86) Internationale Anmeldenummer: PCT/EP2018/053792
(87) Internationale Veröffentlichungsnummer: WO 2018/171983

(56) Entgegenhaltungen:
- EP-A1- 0 811 728
- EP-A1- 3 009 914
- US-A1- 2016 186 413

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Mobile Arbeitsmaschinen wie Bagger oder Kräne oder Teleskoparme oder Hubwerke an mobilen Arbeitsmaschinen können beispielsweise über Hebel, Joysticks oder (Dreh-)Schalter bedient werden. Die Bedienung kann unter Zuhilfenahme spezieller Displays erfolgen. So können beispielsweise Parameter der Arbeitsmaschine über Menüs, die auf dem Display angezeigt werden, oder sogar direkt über ein Touchdisplay eingestellt werden. Um die Bedienung eines solchen Touchdisplays zu erleichtern, kann dieses mit einem haptischen Feedback ausgestattet sein. Damit kann zum einen der Komfort der Bedienung gesteigert werden. Genauer gesagt wird dadurch dem Benutzer, der gegebenenfalls mit Handschuhen arbeitet und das Display in heller, staubiger und vibrierender Umgebung erkennen muss, die Bedienung des Displays überhaupt erst ermöglicht. Zum anderen können neuartige Bedienfunktionen und Bedienkonzepte realisiert werden, die vorher am Joystick oder über Schalter und Potenziometer realisiert wurden.

Die EP 0 811 728 A1 offenbart ein Verfahren zum Bedienen einer Arbeitsmaschine mittels eines berührungsempfindlichen Bildschirms. Der Bildschirm ist als Touch-Screen ausgebildet. Die EP 3 009 914 A1 offenbart einen Bildschirm mit einem Aktor zum Erzeugen einer Kraftrückkopplung und einen Kraftsensor zum Erfassen einer beim Berühren des Bildschirms auf den Bildschirm ausgeübten Bedienkraft. Die US 2016/0186413 A1 offenbart ein Zustandsinformationsdisplay für eine Arbeitsmaschine.

Nach Stand der Technik kann ein Touchdisplay auch mit einem kraftsensitiven Feedback ausgestattet sein. Dabei wird eine Funktion erst nach größerem Andruck auf das Display ausgelöst. Der Benutzer spürt direkt, dass eine größere Kraft benötigt wird. Auch das Feedback kann dann kraftabhängig ausgeführt werden.

Daneben gibt es die Tendenz, das Baggern oder die Bewegung von Auslegern an mobilen Arbeitsmaschinen weiter zu automatisieren. Das ist beispielsweise bei GPS-basiertem Baggern nach 3D-Modellen oder E-Digging der Fall. Bei diesen Ansätzen sollte die Schaufelposition bekannt sein. Gegebenenfalls kann die Schaufelposition über eine Trajektorie vorgegeben oder im Sinne einer Arbeitsraumbegrenzung eingegrenzt sein. Die Arbeitsraumbegrenzung kann als Assistenz- und Sicherheitsfunktion die Bewegung der Ausleger beschränken, um das Eindringen in sicherheitskritische Bereiche zum Schutz von Personen oder Objekten wie Gebäuden oder Leitungen und der mobilen Arbeitsmaschine selbst zu verhindern.

### Offenbarung der Erfindung

Vor diesem Hintergrund werden mit dem hier vorgestellten Ansatz ein Verfahren zum Bedienen einer Arbeitsmaschine mittels eines berührungsempfindlichen Bildschirms, weiterhin ein Steuergerät, das dieses Verfahren verwendet, ein entsprechendes Computerprogramm sowie schließlich ein Bediensystem zum Bedienen einer Arbeitsmaschine gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Bedienen einer Arbeitsmaschine mittels eines berührungsempfindlichen Bildschirms vorgestellt, wobei der Bildschirm einen Aktor zum Erzeugen einer Kraftrückkopplung und/oder einen Kraftsensor zum Erfassen einer beim Berühren des Bildschirms auf den Bildschirm ausgeübten Bedienkraft aufweist, wobei das Verfahren folgende Schritte umfasst:
Einlesen einer Trajektorienvorgabe, die eine von einem Bediener der Arbeitsmaschine durch Berühren des Bildschirms eingegebene Trajektorie der Arbeitsmaschine und/oder eines Auslegers der Arbeitsmaschine repräsentiert; Ausgeben eines Aktorsignals zum Ansteuern des Aktors und/oder eines Kraftänderungssignals zum Ändern eines Kraftschwellenwerts, der eine zum Eingeben der Trajektorie erforderliche Mindestbedienkraft repräsentiert, unter Verwendung der Trajektorienvorgabe.

Unter einer Arbeitsmaschine kann beispielsweise eine Baumaschine mit einem Ausleger wie etwa ein Bagger oder Kran oder auch eine Pistenraupe verstanden werden. Unter einer Arbeitsraumvorgabe kann ein Bereich dreidreidimensionaler Koordinaten verstanden werden, in dem sich die Arbeitsmaschine aufhalten soll. Bei der Trajektorienvorgabe kann es sich beispielsweise um eine Eingabe in Form einer Wischbewegung handeln. Die Trajektorienvorgabe kann somit in Form eines die Trajektorienvorgabe umfassenden Trajektoriensignals über eine Schnittstelle zu dem Bildschirm eingelesen werden. Der Bildschirm kann dazu ausgebildet sein, um die Wischbewegung in ein entsprechendes Trajektoriensignal umzusetzen und bereitzustellen. Bei dem Aktor kann es sich beispielsweise um einen Vibrationsmotor oder um ein sonstiges geeignetes Bauelement zum Erzeugen einer haptischen Rückmeldung handeln. Unter einem Ausleger kann eine verstellbare Einheit an der Arbeitsmaschine verstanden werden, die die Trajektorie vollführen kann. Damit ist z.B. ein Arbeitsarm, Teleskoparm, Hubwerk, ein Roboterarm usw. gemeint.

Der hier vorgestellte Ansatz beruht auf der Erkenntnis, dass eine Trajektorienvorgabe für eine mobile Arbeitsmaschine mithilfe eines haptischen Displays eingegeben und dabei derart verarbeitet werden kann, dass in Abhängigkeit von einer Annäherung eines Auslegers der Arbeitsmaschine an eine Begrenzung eines vorgegebenen Arbeitsraums eine Kraftrückkopplung, auch Force Feedback genannt, an dem Display erzeugt werden kann oder auch eine Berührungsempfindlichkeit des Displays verändert werden kann. Der Vorteil dieses Ansatzes ist, dass das haptische Feedback die Bedienung der Arbeitsmaschine erleichtert.

Vergleichen der Trajektorienvorgabe mit einer Arbeitsraumvorgabe, die einen vorgegebenen Arbeitsraum der Arbeitsmaschine in einem dreidimensionalen Koordinatensystem repräsentiert, um eine Annäherungsinformation, die eine

Annäherung der Arbeitsmaschine und/oder des Auslegers an eine Begrenzung des Arbeitsraums repräsentiert, zu erhalten; und
Ausgeben eines Aktorsignals zum Ansteuern des Aktors und/oder eines Kraftänderungssignals zum Ändern eines Kraftschwellenwerts, der eine zum Eingeben der Trajektorie erforderliche Mindestbedienkraft repräsentiert, unter Verwendung der Annäherungsinformation. Die Annäherungsinformation kann in Form eines die Annäherungsinformation umfassenden Annäherungsinformationssignal bereitgestellt werden. Vorteilhafterweise kann die Sicherheit des Systems erhöht werden, indem der Bediener direkt merkt, wenn er sich kritischen Zonen im Arbeitsraum nähert. Das haptische Feedback wird damit zu einer sicherheitsrelevanten Funktion. Die Eingabe der Trajektorie ist dabei nicht zwangsläufig mit der Arbeitsraumbegrenzung gekoppelt.

Gemäß einer Ausführungsform kann im Schritt des Einlesens eine Positionsinformation, die eine von zumindest einem Positionssensor der Arbeitsmaschine erfasste Position der Arbeitsmaschine oder, zusätzlich oder alternativ, des Auslegers in dem dreidimensionalen Koordinatensystem repräsentiert, eingelesen werden. Dementsprechend kann im Schritt des Vergleichens die Trajektorienvorgabe unter Verwendung der Positionsinformation mit der Arbeitsraumvorgabe verglichen werden, um die Annäherungsinformation zu erhalten. Unter einem Sensor kann beispielsweise ein GPS-Sensor, ein Lage-oder Initialsensor auf dem Ausleger oder auch ein Sensor zur Messung eines Zylinderwegs an oder in einem Hydraulikzylinder der Arbeitsmaschine verstanden werden. Dadurch wird eine genaue Überwachung der Position der Arbeitsmaschine im Arbeitsraum ermöglicht. Alternativ kann die Position z.B. auch mit Hilfe einer Kamera und Bildverarbeitungsalgorithmen ermittelt werden.

Gemäß einer weiteren Ausführungsform kann im Schritt des Ausgebens das Aktorsignal ausgegeben werden, um eine umso stärkere Kraftrückkopplung mittels des Aktors zu erzeugen, je mehr sich die Arbeitsmaschine oder, zusätzlich oder alternativ, der Ausleger der Begrenzung des Arbeitsraums annähert. Zusätzlich oder alternativ kann im Schritt des Ausgebens das Kraftänderungssignal ausgegeben werden, um den Kraftschwellenwert umso höher zu setzen, je mehr sich die Arbeitsmaschine oder, zusätzlich oder alternativ, der Ausleger der Begrenzung des Arbeitsraums annähert. Dadurch kann der Bediener wirksam und frühzeitig vor der Annäherung der Arbeitsmaschine bzw. des Auslegers an die Begrenzung des Arbeitsraums gewarnt werden. Somit wird eine besonders präzise und sichere Bedienung der Arbeitsmaschine mittels des berührungsempfindlichen Bildschirms ermöglicht.

Es ist vorteilhaft, wenn im Schritt des Einlesens eine Wischbewegung des Bedieners repräsentierende Information als die Trajektorienvorgabe eingelesen wird. Dabei kann im Schritt des Ausgebens das Aktorsignal ausgegeben werden, um die Kraftrückkopplung bei der Wischbewegung zu erzeugen. Zusätzlich oder alternativ kann im Schritt des Ausgebens das Kraftänderungssignal ausgegeben werden, um den Kraftschwellenwert bei der Wischbewegung zu ändern. Dadurch kann die Ergonomie bei der Bedienung der Arbeitsmaschine mittels des berührungsempfindlichen Bildschirms erhöht werden.

Des Weiteren kann das Verfahren einen Schritt des Anzeigens einer die Annäherung repräsentierenden visuellen Information auf dem Bildschirm unter Verwendung der Annäherungsinformation umfassen. Bei der visuellen Information kann es sich beispielsweise um eine Farbskala zum Darstellen der Annäherung anhand eines Farbverlaufs oder eine sonstige optisch wahrnehmbare Information handeln. Dadurch kann der Bediener beim Bedienen der Arbeitsmaschine zusätzlich visuell unterstützt werden. Zusätzlich oder alternativ kann die Annäherung durch eine haptische Information angezeigt werden. Somit kann im Schritt des Anzeigens zusätzlich oder alternativ eine die Annäherung repräsentierenden haptischen Information auf dem Bildschirm unter Verwendung der Annäherungsinformation angezeigt werden.

Gemäß einer weiteren Ausführungsform kann im Schritt des Anzeigens die Arbeitsmaschine, der Ausleger, der Arbeitsraum, die Trajektorie, das dreidimensionale Koordinatensystem, ein Scrollbalken oder eine Kombination aus zumindest zwei der genannten Elemente als die visuelle und/oder haptische Information angezeigt werden. Dadurch kann der Bedienkomfort beim Bedienen der Arbeitsmaschine weiter erhöht werden.

Dieses Verfahren kann beispielsweise in Software oder Hardware oder in einer Mischform aus Software und Hardware, beispielsweise in einem Steuergerät, implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch des Steuregeräts nach Anspruch 8 kann die der Erfindung zugrunde liegende Aufgabe schnell und effizient löst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer-und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung der Arbeitsmaschine. Hierzu kann das Steuergerät beispielsweise auf Sensorsignale wie Beschleunigungs-, Druck-, Lenkwinkel- oder Umfeldsensorsignale zugreifen. Die Ansteuerung erfolgt über Aktoren wie Brems- oder Lenkaktoren oder ein Motorsteuergerät der Arbeitsmaschine.

Der hier vorgestellte Ansatz schafft zudem ein Bediensystem zum Bedienen einer Arbeitsmaschine, wobei das Bediensystem folgende Merkmale aufweist:
einen berührungsempfindlichen Bildschirm mit einem Aktor zum Erzeugen einer Kraftrückkopplung und/oder einem Kraftsensor zum Erfassen einer beim Berühren des Bildschirms auf den Bildschirm ausgeübten Bedienkraft; und
ein Steuergerät gemäß dem Gegenstand des Anspruchs 8

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine schematische Darstellung einer Arbeitsmaschine mit einem Bediensystem gemäß einem Ausführungsbeispiel;
- Fig. 2: eine schematische Darstellung eines Steuergeräts gemäß der Erfindung;
- Fig. 3: eine schematische Darstellung einer Arbeitsmaschine aus Fig. 1;
- Fig. 4: eine schematische Darstellung eines Bildschirms gemäß einem Ausführungsbeispiel;
- Fig. 5: eine schematische Darstellung eines Bildschirms aus Fig. 4;
- Fig. 6: eine schematische Darstellung eines Bildschirms aus Fig. 4;
- Fig. 7: eine schematische Darstellung eines Aufbaus eines Bildschirms gemäß einem Ausführungsbeispiel; und
- Fig. 8: ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

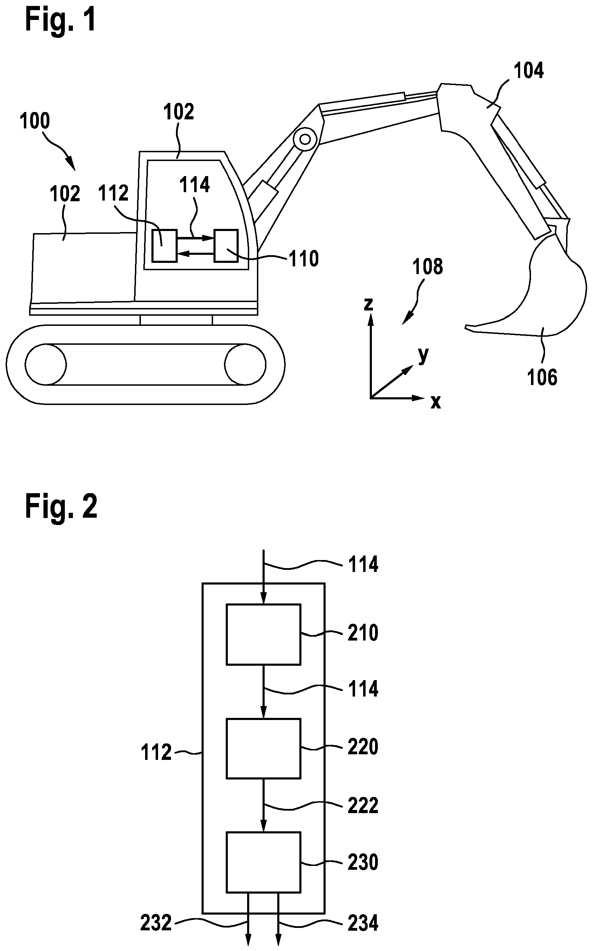

Fig. 1 zeigt eine schematische Darstellung einer Arbeitsmaschine 100 mit einem Bediensystem 102 gemäß einem Ausführungsbeispiel. Neben der Arbeitsmaschine 100, hier einem Bagger mit einem Ausleger 104 und einer Baggerschaufel 106, ist ein dreidimensionales Koordinatensystem 108 aus drei Achsen x, y und z eingezeichnet. Innerhalb des Koordinatensystems 108 wird beispielsweise eine Position und Trajektorie der Baggerschaufel 106 vorgegeben. Das Bediensystem 102 umfasst einen berührungsempfindlichen Bildschirm 110 sowie ein Steuergerät 112. Der Bildschirm 110 ist als ein kraftsensitives, haptisches Display realisiert. Das Steuergerät 112 ist ausgebildet, um von dem Bildschirm 110 eine Trajektorienvorgabe 114, die eine von einem Bediener der Arbeitsmaschine 100 durch Berühren des Bildschirms 110 eingegebene Trajektorie der Arbeitsmaschine 100, hier beispielsweise des Auslegers 104 oder der Baggerschaufel 106, einzulesen, beispielsweise in Form eines elektrischen Signals. Optional ist das Steuergerät 112 ausgebildet, um die Trajektorienvorgabe 114 mit einer Arbeitsraumvorgabe, die einen innerhalb des Koordinatensystems 108 vorgegebenen Arbeitsraum der Arbeitsmaschine 100 repräsentiert, mit Hinblick auf eine Annäherung der Arbeitsmaschine 100 an eine Begrenzung des Arbeitsraums zu vergleichen. Beispielsweise können bei einem entsprechenden Vergleich Koordinatenwerte der Trajektorienvorgabe 114 mit Koordinatenwerten der Arbeitsraumvorgabe verglichen werden. In Abhängigkeit von der Trajektorienvorgabe 114 oder gegebenenfalls von der ermittelten Annäherung steuert das Steuergerät 112 den Bildschirm 110 derart an, dass eine entsprechende haptische Rückkopplung am Bildschirm 110 erzeugt wird. Je nach Ausführungsbeispiel verändert das Steuergerät 112 in Abhängigkeit von der Annäherung zusätzlich oder alternativ eine Berührungsempfindlichkeit des Bildschirms 110. Dazu kann das Steuergerät 112 ein oder mehrere Steuersignale, beispielsweise in Form eines Aktorsignals und/oder eines Kraftänderungssignals, bereitstellen, die geeignet sind um den Bildschirm 110 so anzusteuern, dass die haptische Rückkopplung am Bildschirm 110 erzeugt wird und/oder die Berührungsempfindlichkeit des Bildschirms 110 angepasst wird.

Die Umsetzung von Bedienfunktionen der mobilen Arbeitsmaschine 100 erfolgt über ein kraftsensitives haptisches Display 110. Dabei wird die Trajektorie auf dem Touchdisplay 110 vom Bediener vorgegeben und diesem die Annäherung an die Arbeitsraumbegrenzung über ein haptisches kraftsensitives Signal zurückgemeldet. Fig. 1 zeigt das Koordinatensystem 108, in dem sich der Ausleger 104 und die Baggerschaufel 106 bewegen. Die Position bzw. die Extrempunkte der beweglichen Teile, etwa des Auslegers 104 oder eines Teleskoparms, werden dabei beispielsweise von entsprechenden Sensoren der Arbeitsmaschine 100 sensiert und an das System der Trajektorienvorgabe sowie an das Display 110 zurückgemeldet und darauf dargestellt.

Fig. 2 zeigt eine schematische Darstellung eines Steuergeräts 112 gemäß der Erfindung. Das Steuergerät 112 umfasst eine Einleseeinheit 210 zum Einlesen der Trajektorienvorgabe 114 und eine Vergleichseinheit 220 zum Vergleichen der Trajektorienvorgabe 114 mit der Arbeitsraumvorgabe. Als Ergebnis des Vergleichs sendet die Vergleichseinheit 220 eine die Annäherung der Arbeitsmaschine oder des Auslegers an die Begrenzung des Arbeitsraums repräsentierende Annäherungsinformation 222 an eine Ausgabeeinheit 230 des Steuergeräts 112, beispielsweise in Form eines elektrischen Signals. Die Ausgabeeinheit 230 ist ausgebildet, um die Trajektorienvorgabe 114 und/oder die Annäherungsinformation 222 zur Erzeugung eines Aktorsignals 232 zum Ansteuern eines Aktors des Bildschirms, etwa eines Vibrationsmotors oder eines flächig aufgebrachten Aktors, z.B. ein elektroaktives Polymere, oder auch zur Erzeugung eines Kraftänderungssignals 234 zum Ändern eines Kraftschwellenwerts, der eine zum Eingeben der Trajektorie erforderliche Mindestbedienkraft repräsentiert, zu verwenden.

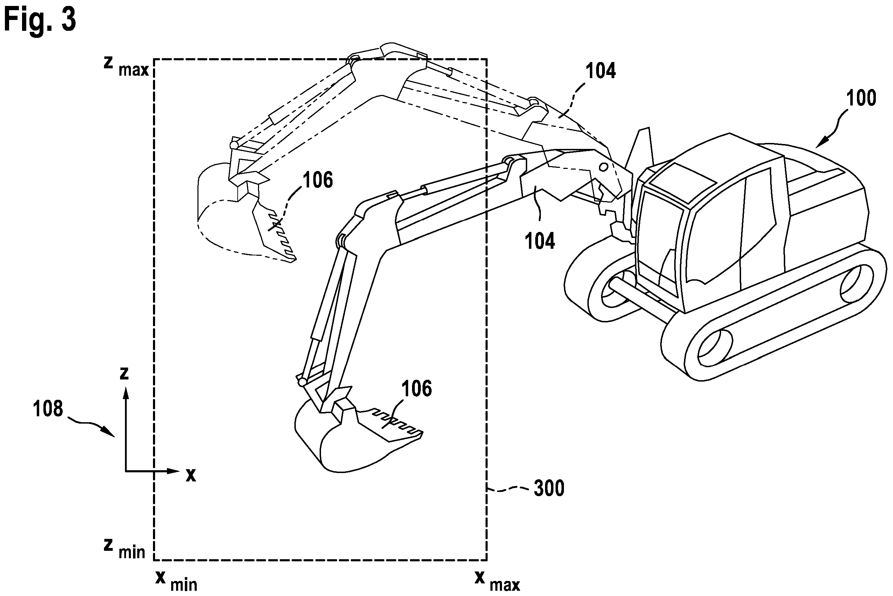

Fig. 3 zeigt eine schematische Darstellung einer Arbeitsmaschine 100 aus Fig. 1. Gezeigt ist eine Vorgabe einer Arbeitsraumbegrenzung 300 für die Baggerschaufel 106 in Form eines gestrichelten Rechtecks innerhalb von Grenzen xₘᵢₙ, xₘₐₓ und zₘᵢₙ, zₘₐₓ im Koordinatensystem 108 (nicht dargestellt ist die y-Richtung mit den Begrenzungen yₘᵢₙ und yₘₐₓ). Fig. 3 verdeutlicht die Arbeitsraumbegrenzung 300 für die Baggerschaufel 106 innerhalb des Koordinatensystems 108. Die sensorische Ermittlung der Schaufelposition erfolgt etwa über GPS, mit Hilfe einer Kamera, über eine Lage- und Inertialsensorik auf dem Arbeitsarm 104 oder eine Zylinderwegmessung an oder in den Hydraulikzylindern der Arbeitsmaschine 100.

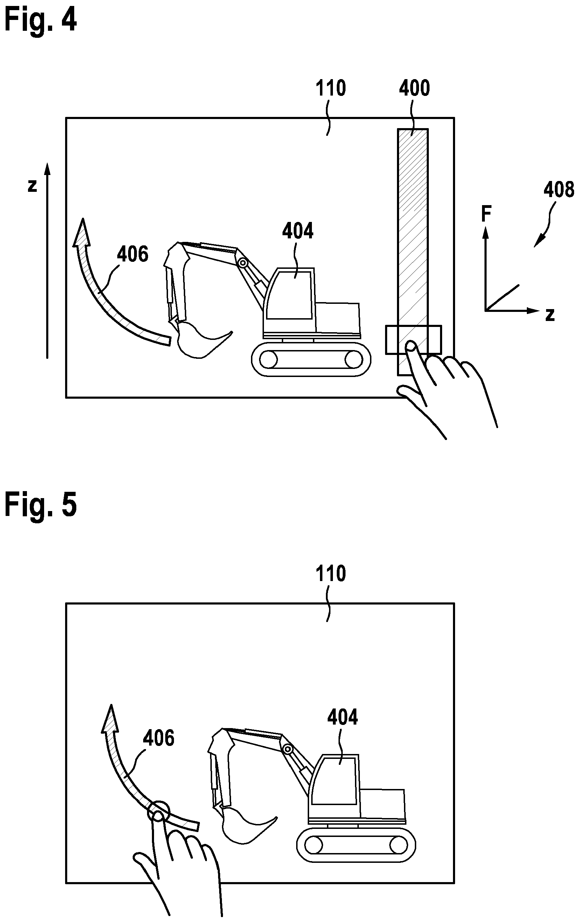

Fig. 4 zeigt eine schematische Darstellung eines Bildschirms 110 gemäß einem Ausführungsbeispiel, etwa eines vorangehend anhand von Fig. 1 beschriebenen Bildschirms. Gezeigt ist ein kraftsensitives Feedback auf einem haptischen Touchdisplay mittels einer Scrollbar 400. Rechts neben dem Bildschirm 110 ist ein Diagramm 408 zur Darstellung einer Bedienkraft F in Abhängigkeit von einem Weg einer Wischbewegung des Bedieners in z-Richtung des Koordinatensystems gezeigt. Die Bedienkraft F zur Auslösung der Trajektorie auf der Scrollbar 400 oder optional auch das haptische Feedback steigt dabei in z-Richtung an. Beispielsweise wird die zunehmende Bedienkraft farblich durch einen Wechsel der Farbe des Scrollbalkens 400 von einer ersten Farbe, beispielsweise Grün, nach einer weiteren Farbe, beispielsweise Rot, visualisiert. Zusätzlich wird auf dem Bildschirm 110 die Arbeitsmaschine in Form eines Baggersymbols 404 angezeigt. Die durch den Benutzer vorgegebene Trajektorie ist mit einem gekrümmten Pfeil 406 angedeutet.

Fig. 4 zeigt beispielhaft die Umsetzung der Trajektorienvorgabe auf dem Bildschirm 110, wobei lediglich der Scrollbalken 400 mit dem kraftsensitiven haptischen Feedback versehen ist. Zum einen wird die Kraft, die erforderlich ist, um den Scrollbalken 400 in Richtung Rot zu schieben, immer größer, zum anderen steigt dabei die Kraft bzw. Intensität des Feedbacks an. Damit merkt der Bediener der Arbeitsmaschine direkt auf dem Bildschirm 110, dass sich die Schaufel der Arbeitsraumbegrenzung nähert. Die Trajektorie wird beispielsweise farblich adäquat auf dem Bildschirm 110 dargestellt, etwa in Form des Pfeils 406.

Fig. 5 zeigt eine schematische Darstellung eines Bildschirms 110 aus Fig. 4. Im Unterschied zu Fig. 4 wird die Trajektorie hier nicht mittels eines Scrollbalkens, sondern direkt auf dem Bildschirm 110 durch eine entsprechende Wischbewegung des Bedieners vorgegeben. Dabei erzeugt das Steuergerät gemäß den Koordinaten der Arbeitsraumbegrenzung durch entsprechendes Ansteuern des Bildschirms 110 ein kraftsensitives Feedback. Die Annäherung an die Arbeitsraumbegrenzung wird zusätzlich passend farblich auf dem Bildschirm 110 dargestellt.

Gemäß einem Ausführungsbeispiel erzeugt der Bildschirm 110 die Kraftrückkopplung lediglich im Bereich des Pfeils 406. Zusätzlich wird die Annäherung an die Arbeitsraumbegrenzung farblich dargestellt, beispielsweise durch die Farbe Rot, die somit eine größere Auslösekraft für das Schieben des Scrollbuttons sowie gegebenenfalls ein stärkeres haptisches Feedback symbolisiert. Dabei wird die Trajektorie vom Bediener direkt auf dem Bildschirm 110 vorgegeben. Durch das Sensieren der Position des Fingers und mithilfe der bekannten Koordinaten der Schaufel und der Arbeitsraumbegrenzung kann das kraftsensitive Feedback für jede Position berechnet und umgesetzt werden.

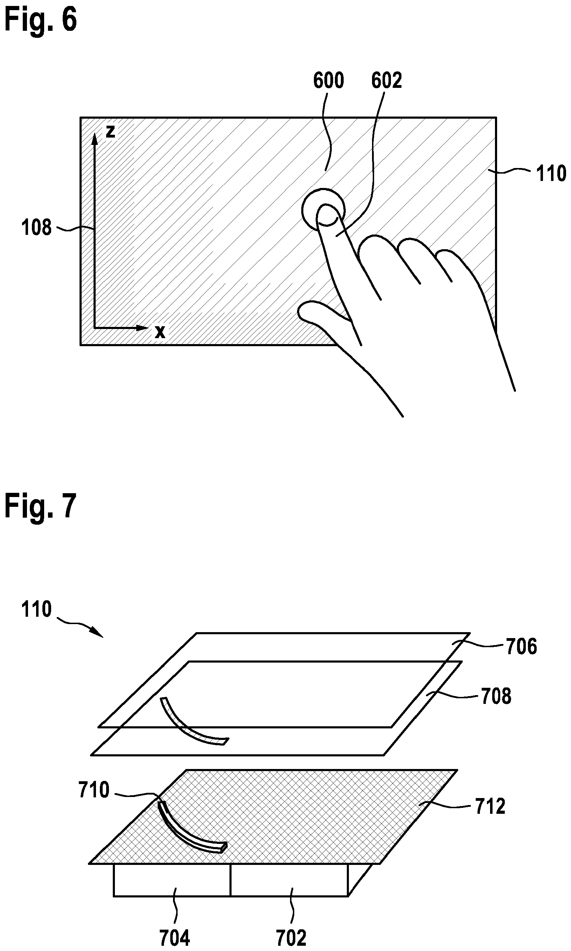

Fig. 6 zeigt eine schematische Darstellung eines Bildschirms 110 aus Fig. 4. Im Unterschied zu den beiden Figuren 4 und 5 wird gemäß diesem Ausführungsbeispiel zusätzlich der Arbeitsraum im Koordinatensystem 108 auf dem Bildschirm 110 dargestellt, beispielsweise in Form eines farblich gekennzeichneten Bedienungsbereichs 600 auf dem Bildschirm 110. Die Bewegung eines Fingers 602 des Bedieners innerhalb der Arbeitsraumkoordinaten ist dabei kraftsensitiv in der Auslösung und dem Feedback und beispielsweise farblich gekennzeichnet durch einen Farbübergang von Grün nach Rot.

Gemäß einem Ausführungsbeispiel wird der gesamte Arbeitsraum auf dem Bildschirm 110 abgebildet und farblich hinterlegt. Die Randzonen, die eine Begrenzung darstellen, sind beispielsweise durch einen Übergang von Grün nach Rot gekennzeichnet. Dabei erzeugt der Bildschirm 110 ein kraftsensitives Feedback in der Form, dass das Ziehen eines Buttons, hier durch einen Kreis angedeutet, in die Randpositionen schwieriger wird, d. h. mehr Kraft vonseiten des Bedieners erfordert. Ebenso wird das haptische Feedback des Bildschirms 110, erzeugt etwa durch eine Vibration, entsprechend verstärkt.

Fig. 7 zeigt eine schematische Darstellung eines Aufbaus eines Bildschirms 110 gemäß einem Ausführungsbeispiel, etwa eines vorangehend anhand der Figuren 1 bis 6 beschriebenen Bildschirms. Der Bildschirm 110 umfasst einen Aktor 702 zum Erzeugen der Kraftrückkopplung und einen Kraftsensor 704 zum Erfassen der beim Berühren auf den Bildschirm 110 ausgeübten Kraft. Mittels des Aktors 702 und des Kraftsensors 704 wird unterhalb eines Touchpanels 706 und eines Displays 708 des Bildschirms 110 das haptische, kraftsensitive Feedback generiert. Der Aktor 702 erzeugt beispielsweise durch Vibration oder Erhebung eine haptische Anregung der Trajektorie und gibt das kraftsensitive Feedback gemäß den Koordinaten innerhalb der Arbeitsraumbegrenzung. Die haptische angeregte Trajektorie ist in Fig. 7 beispielhaft durch eine gekrümmte Erhebung 710 angedeutet, durch die der Bediener fühlt, wenn er sich der Arbeitsraumbegrenzung nähert.

Das Touchpanel 706 ist ausgebildet, um die Koordinaten einer Berührung des Bildschirms 110 zu registrieren. Der Bildschirm 110 stellt dabei die Trajektorie farblich dar. In einer darunter liegenden Schicht 712 wird durch den Kraftsensor 704 und den Aktor 702 das kraftsensitive Feedback erzeugt. Alternativ kann sich ein transparenter flächig aufgebrachter Kraftsensor und Aktor auch auf dem Bildschirm befinden.

Als Aktoren zur Erzeugung des haptischen Feedback werden beispielsweise Linear Resonant Actuators (LRA), Exzentermassen, Motoren, ionische elektroaktive Polymere (EAP), Exiter oder Ultraschallmodule verwendet.

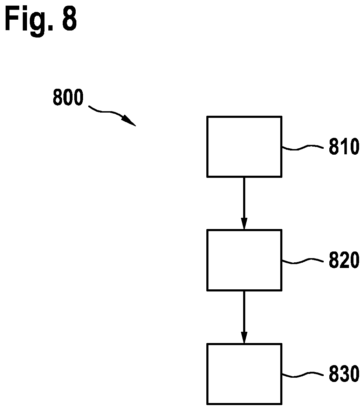

Fig. 8 zeigt ein Ablaufdiagramm eines Verfahrens 800 gemäß einem Ausführungsbeispiel. Das Verfahren 800 zum Bedienen einer Arbeitsmaschine kann beispielsweise unter Verwendung eines vorangehend anhand der Figuren 1 bis 7 beschriebenen Steuergeräts durchgeführt werden. Dabei wird in einem Schritt 810 die Trajektorienvorgabe eingelesen. In einem optionalen Schritt 820 wird die Trajektorienvorgabe mit der Arbeitsraumvorgabe verglichen, um die Annäherungsinformation zu erhalten. Schließlich wird in einem Schritt 830 das Aktorsignal oder, zusätzlich oder alternativ, das Kraftänderungssignal unter Verwendung der Trajektorienvorgabe 114 und/oder der Annäherungsinformation ausgegeben.

Der hier vorgestellte Ansatz schafft somit eine Funktion zur Bedienung einer Arbeitsmaschine, bei der ein Touchscreen ein kraftsensitives Feedback gibt. Dabei sind die Auslösung und das Feedback auf dem Touchscreen kraftsensitiv. Die Trajektorie wird beispielsweise über das Touchpanel des Touchscreens eingelesen. Durch eine Sensorik wird die Lage des Auslegers oder Teleskoparms, d. h. der Extrempunkte der Maschinenposition, zurückgemeldet. Ferner umfasst der hier vorgestellte Ansatz je nach Ausführungsbeispiel die Vorgabe von Koordinaten einer Arbeitsraumbegrenzung, die Darstellung der Trajektorie auf dem Display, die Darstellung des Arbeitsraums auf dem Display, die Realisierung einer Scrollfunktion oder einer Schiebe- oder Ziehbewegung auf dem Display mit kraftsensitivem Feedback oder ein kraftsensitives Feedback abhängig von den Koordinaten der Arbeitsraumbegrenzung. Gegebenenfalls erfolgt zusätzlich die Umsetzung sicherheitsrelevanter Funktionen mittels des Feedbacks.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (800) zum Bedienen einer Arbeitsmaschine (100) mittels eines berührungsempfindlichen Bildschirms (110), **dadurch gekennzeichnet, dass** der Bildschirm (110) einen Aktor (702) zum Erzeugen einer Kraftrückkopplung und/oder einen Kraftsensor (704) zum Erfassen einer beim Berühren des Bildschirms (110) auf den Bildschirm (110) ausgeübten Bedienkraft (F) aufweist, wobei das Verfahren (800) folgende Schritte umfasst:
Einlesen (810) einer Trajektorienvorgabe (114), die eine von einem Bediener der Arbeitsmaschine (100) durch Berühren des Bildschirms (110) eingegebene Trajektorie der Arbeitsmaschine (100) und/oder eines Auslegers (104, 106) der Arbeitsmaschine (100) repräsentiert; und
Ausgeben (830) eines Aktorsignals (232) zum Ansteuern des Aktors (702) und/oder eines Kraftänderungssignals (234) zum Ändern eines Kraftschwellenwerts, der eine zum Eingeben der Trajektorie erforderliche Mindestbedienkraft repräsentiert, unter Verwendung der Trajektorienvorgabe (114).

2. Verfahren (800) gemäß Anspruch 1, mit einem Schritt des Vergleichens (820) der Trajektorienvorgabe (114) mit einer Arbeitsraumvorgabe, die einen vorgegebenen Arbeitsraum der Arbeitsmaschine (100) in einem dreidimensionalen Koordinatensystem (108) repräsentiert, um eine Annäherungsinformation (222), die eine Annäherung der Arbeitsmaschine (100) und/oder des Auslegers (104, 106) an eine Begrenzung (300) des Arbeitsraums repräsentiert, zu erhalten, und wobei im Schritt des Ausgebens das Aktorsignal (232) unter Verwendung der Annäherungsinformation (222) ausgegeben wird.

3. Verfahren (800) gemäß einem der vorangegangenen Ansprüche, bei dem im Schritt des Einlesens (810) eine Positionsinformation, die eine von zumindest einem Positionssensor der Arbeitsmaschine (100) erfasste Position der Arbeitsmaschine (100) und/oder des Auslegers (104, 106) in dem dreidimensionalen Koordinatensystem (108) repräsentiert, eingelesen wird, wobei im Schritt des Vergleichens (820) die Trajektorienvorgabe (114) unter Verwendung der Positionsinformation mit der Arbeitsraumvorgabe verglichen wird, um die Annäherungsinformation (222) zu erhalten.

4. Verfahren (800) gemäß einem der vorangegangenen Ansprüche, bei dem im Schritt des Ausgebens (830) das Aktorsignal (232) ausgegeben wird, um eine umso stärkere Kraftrückkopplung mittels des Aktors (702) zu erzeugen, je mehr sich die Arbeitsmaschine (100) und/oder der Ausleger (104, 106) der Begrenzung (300) des Arbeitsraums annähert, und/oder das Kraftänderungssignal (234) ausgegeben wird, um den Kraftschwellenwert umso höher zu setzen, je mehr sich die Arbeitsmaschine (100) und/oder der Ausleger (104, 106) der Begrenzung (300) des Arbeitsraums annähert.

5. Verfahren (800) gemäß einem der vorangegangenen Ansprüche, bei dem im Schritt des Einlesens (810) eine eine Wischbewegung des Bedieners repräsentierende Information als die Trajektorienvorgabe (114) eingelesen wird, wobei im Schritt des Ausgebens (830) das Aktorsignal (232) ausgegeben wird, um die Kraftrückkopplung bei der Wischbewegung zu erzeugen, und/oder das Kraftänderungssignal (234) ausgegeben wird, um den Kraftschwellenwert bei der Wischbewegung zu ändern.

6. Verfahren (800) gemäß einem der vorangegangenen Ansprüche, mit einem Schritt des Anzeigens einer die Annäherung repräsentierenden visuellen und/oder haptischen Information (108; 400, 404, 406; 600) auf dem Bildschirm (110) unter Verwendung der Annäherungsinformation (222).

7. Verfahren (800) gemäß Anspruch 6, bei dem im Schritt des Anzeigens die Arbeitsmaschine (100) und/oder der Ausleger (104, 106) und/oder der Arbeitsraum und/oder die Trajektorie und/oder das dreidimensionale Koordinatensystem (108) und/oder ein Scrollbalken (400) als die visuelle und/oder haptische Information angezeigt wird.

8. Steuergerät (112) zum Bedienen einer Arbeitsmaschine (100) mittels eines berührungsempfindlichen Bildschirms (110), **dadurch gekennzeichnet, dass** der Bildschirm (110) einen Aktor (702) zum Erzeugen einer Kraftrückkopplung und/oder einen Kraftsensor (704) zum Erfassen einer beim Berühren des Bildschirms (110) auf den Bildschirm (110) ausgeübten Bedienkraft (F) aufweist, wobei das Steuergerät die folgenden Merkmale aufweist:
eine Einleseeinheit (210), die ausgebildet ist, um eine Trajektorienvorgabe (114) einzulesen, die eine von einem Bediener der Arbeitsmaschine (100) durch Berühren des Bildschirms (110) eingegebene Trajektorie der Arbeitsmaschine (100) und/oder eines Auslegers (104, 106) der Arbeitsmaschine (100) repräsentiert;
eine Vergleichseinheit (220), die ausgebildet ist, um die Trajektorienvorgabe (114) mit einer Arbeitsraumvorgabe zu vergleichen, die einen vorgegebenen Arbeitsraum der Arbeitsmaschine (100) in einem dreidimensionalen Koordinatensystem (108) repräsentiert, um eine Annäherungsinformation (222) zu erhalten, die eine Annäherung der Arbeitsmaschine (100) und/oder des Auslegers (104, 106) an eine Begrenzung (300) des Arbeitsraums repräsentiert; und
eine Ausgabeeinheit (230), die ausgebildet ist, um ein Aktorsignal (232) zum Ansteuern des Aktors (702) und/oder eines Kraftänderungssignals (234) zum Ändern eines Kraftschwellenwerts, der eine zum Eingeben der Trajektorie erforderliche Mindestbedienkraft repräsentiert, unter Verwendung der Trajektorienvorgabe (114) und der Annäherungsinformation (222) auszugeben.

9. Bediensystem (102) zum Bedienen einer Arbeitsmaschine (100), wobei das Bediensystem (102) folgende Merkmale aufweist:
einen berührungsempfindlichen Bildschirm (110) mit einem Aktor (702) zum Erzeugen einer Kraftrückkopplung und/oder einem Kraftsensor (704) zum Erfassen einer beim Berühren des Bildschirms (110) auf den Bildschirm (110) ausgeübten Bedienkraft (F); und
ein Steuergerät (112) gemäß Anspruch 8.

10. Computerprogramm, das ausgebildet ist, um das Verfahren (800) gemäß einem der Ansprüche 1 bis 7 auszuführen und/oder anzusteuern wenn das Computerprogramm auf einem Computer ausgeführt wird.

11. Maschinenlesbares Speichermedium, auf dem das Computerprogramm nach Anspruch 10 gespeichert ist.

## Claims

1. Method (800) for operating a work machine (100) by means of a touch-sensitive screen (110), **characterized in that** the screen (110) has an actuator (702) for generating force feedback and/or a force sensor (704) for sensing an operating force (F) which is applied to the screen (110) when the screen (110) is touched, wherein the method (800) comprises the following steps:
reading in (810) a trajectory specification (114) which represents a trajectory of the work machine (100) and/or of a boom (104, 106) of the work machine (100), which is input by an operator of the work machine (100) by touching the screen (110); and
outputting (830) an actuator signal (232) for actuating the actuator (702) and/or a force-changing signal (234) for changing a force threshold value which represents a minimum operating force which is necessary to input the trajectory, using the trajectory specification (114).

2. Method (800) according to Claim 1, having a step of comparing (820) the trajectory specification (114) with a working space specification, which represents a predefined working space of the work machine (100) in a three-dimensional coordinate system (108), in order to obtain approach information (222) which represents an approach of the work machine (100) and/or of the boom (104, 106) to a boundary (300) of the working space, and wherein in the outputting step the actuator signal (232) is output using the approach information (222).

3. Method (800) according to either of the preceding claims, in which in the reading in step (810) position information which represents a position of the work machine (100) and/or of the boom (104, 106), sensed by at least one position sensor of the work machine (100), in the three-dimensional coordinate system (108), is read in, wherein in the comparison step (820) the trajectory specification (114) is compared with the working space specification using the position information, in order to obtain the approach information (222).

4. Method (800) according to one of the preceding claims, in which in the outputting step (830) the actuator signal (232) is output in order to generate, by means of the actuator (702), force feedback which is stronger the greater the degree to which the work machine (100) and/or the boom (104, 106) approaches the boundary (300) of the working space, and/or the force-changing signal (234) is output in order to set the force threshold value higher in accordance with the degree to which the work machine (100) and/or the boom (104, 106) approaches the boundary (300) of the working space.

5. Method (800) according to one of the preceding claims, in which in the reading in step (810) information which represents a wiping movement of the operator is read in as the trajectory specification (114), wherein in the outputting step (830) the actuator signal (232) is output in order to generate the force feedback during the wiping movement, and/or the force-changing signal (234) is output to change the force threshold value during the wiping movement.

6. Method (800) according to one of the preceding claims, having a step of displaying visual and/or haptic information (108; 400, 404, 406; 600) which represents the approach, on the screen (110) using the approach information (222).

7. Method (800) according to Claim 6, in which, in the display step, the work machine (100) and/or the boom (104, 106) and/or the working space and/or the trajectory and/or the three-dimensional coordinate system (108) and/or a scroll bar (400) are/is displayed as the visual and/or haptic information.

8. Control device (112) for operating a work machine (100) by means of a touch-sensitive screen (110), **characterized in that** the screen (110) has an actuator (702) for generating force feedback and/or a force sensor (704) for sensing an operating force (F) which is applied to the screen (110) when the screen (110) is touched, wherein the control device has the following features:
a reading in unit (210) which is designed to read in a trajectory specification (114) which represents a trajectory of the work machine (100) and/or of a boom (104, 106) of the work machine (100) which is input by an operator of the work machine (100) by touching the screen (110);
a comparison unit (220) which is designed to compare the trajectory specification (114) with a working space specification, which represents a predefined working space of the work machine (100) in a three-dimensional coordinate system (108), in order to obtain approach information (222) which represents an approach of the work machine (100) and/or of the boom (104, 106) to a boundary (300) of the working space; and
an output unit (230) which is designed to output an actuator signal (232) for actuating the actuator (702) and/or a force-changing signal (234) for changing a force threshold value which represents a minimum operating force which is necessary to input the trajectory, using the trajectory specification (114) and the approach information (222).

9. Operating system (102) for operating a work machine (100), wherein the operating system (102) has the following features:
a touch-sensitive screen (110) with an actuator (702) for generating force feedback and/or a force sensor (704) for sensing an operating force (F) which is applied to the screen (110) when the screen (110) is touched;
and
a control device (112) according to Claim 8.

10. Computer program which is designed to carry out and/or actuate the method (800) according to one of Claims 1 to 7 when the computer program is run on a computer.

11. Machine-readable storage medium in which the computer program according to Claim 10 is stored.

## Revendications

1. Procédé (800) permettant de manœuvrer une machine de travail (100) au moyen d'un écran tactile (110), **caractérisé en ce que** l'écran (110) présente un actionneur (702) pour générer un retour de force et/ou un capteur de force (704) pour détecter une force de manœuvre (F) exercée sur l'écran (110) lorsque l'écran (110) est touché, le procédé (800) comprenant les étapes suivantes consistant à :
lire (810) une spécification de trajectoire (114) qui représente une trajectoire de la machine de travail (100) et/ou d'une flèche (104, 106) de la machine de travail (100), entrée par un opérateur de la machine de travail (100) en touchant l'écran (110) ; et
émettre (830) un signal d'actionneur (232) pour piloter l'actionneur (702) et/ou un signal de modification de force (234) pour modifier une valeur seuil de force qui représente une force de manœuvre minimale nécessaire pour entrer la trajectoire, en utilisant la spécification de trajectoire (114).

2. Procédé (800) selon la revendication 1, comprenant une étape de comparaison (820) de la spécification de trajectoire (114) avec une spécification d'espace de travail qui représente un espace de travail prédéfini de la machine de travail (100) dans un système de coordonnées tridimensionnel (108) pour obtenir une information d'approche (222) qui représente une approche de la machine de travail (100) et/ou de la flèche (104, 106) d'une limite (300) de l'espace de travail, et dans lequel, à l'étape d'émission, le signal d'actionneur (232) est émis en utilisant l'information d'approche (222).

3. Procédé (800) selon l'une quelconque des revendications précédentes, dans lequel à l'étape de lecture (810), une information de position est lue qui représente une position de la machine de travail (100) et/ou de la flèche (104, 106), qui est détectée par au moins un capteur de position de la machine de travail (100), dans le système de coordonnées tridimensionnel (108), dans lequel, à l'étape de comparaison (820), la spécification de trajectoire (114) est comparée avec la spécification d'espace de travail en utilisant l'information de position afin d'obtenir l'information d'approche (222).

4. Procédé (800) selon l'une quelconque des revendications précédentes, dans lequel, à l'étape d'émission (830), le signal d'actionneur (232) est émis pour générer au moyen de l'actionneur (702) un retour de force d'autant plus fort que la machine de travail (100) et/ou la flèche (104, 106) s'approchent de la limite (300) de l'espace de travail, et/ou le signal de modification de force (234) est émis pour fixer la valeur seuil de force de façon que plus elle est haute, la machine de travail (100) et/ou la flèche (104, 106) s'approchent de la limite (300) de l'espace de travail.

5. Procédé (800) selon l'une quelconque des revendications précédentes, dans lequel, à l'étape de lecture (810), une information représentant un mouvement de glissement de l'opérateur est lue en tant que spécification de trajectoire (114), dans lequel, à l'étape d'émission (830), le signal d'actionneur (232) est émis pour générer le retour de force lors du mouvement de glissement, et/ou le signal de modification de force (234) est émis pour modifier la valeur seuil de force lors du mouvement de glissement.

6. Procédé (800) selon l'une quelconque des revendications précédentes, comprenant une étape d'affichage à l'écran (110) d'une information visuelle et/ou haptique (108 ; 400, 404, 406 ; 600) représentant l'approche en utilisant l'information d'approche (222).

7. Procédé (800) selon la revendication 6, dans lequel, à l'étape d'affichage, la machine de travail (100) et/ou la flèche (104, 106) et/ou l'espace de travail et/ou la trajectoire et/ou le système de coordonnées tridimensionnel (108) et/ou une barre de défilement (400) sont affichés en tant qu'information visuelle et/ou haptique.

8. Appareil de commande (112) permettant de manœuvrer une machine de travail (100) au moyen d'un écran tactile (110), **caractérisé en ce que** l'écran (110) présente un actionneur (702) pour générer un retour de force et/ou un capteur de force (704) pour détecter une force de manœuvre (F) exercée sur l'écran (110) lorsque l'écran (110) est touché, l'appareil de commande présentant les particularités suivantes :
une unité de lecture (210) qui est réalisée pour lire une spécification de trajectoire (114) qui représente une trajectoire de la machine de travail (100) et/ou d'une flèche (104, 106) de la machine de travail (100), entrée par un opérateur de la machine de travail (100) en touchant l'écran (110) ;
une unité de comparaison (220) qui est réalisée pour comparer la spécification de trajectoire (114) avec une spécification d'espace de travail qui représente un espace de travail prédéfini de la machine de travail (100) dans un système de coordonnées tridimensionnel (108) pour obtenir une information d'approche (222) qui représente une approche de la machine de travail (100) et/ou de la flèche (104, 106) d'une limite (300) de l'espace de travail ; et
une unité d'émission (230) qui est réalisée pour émettre un signal d'actionneur (232) pour piloter l'actionneur (702) et/ou un signal de modification de force (234) pour modifier une valeur seuil de force qui représente la force de manœuvre minimale nécessaire pour entrer la trajectoire, en utilisant la spécification de trajectoire (114) et l'information d'approche (222).

9. Système de manœuvre (102) permettant de manœuvrer une machine de travail (100), le système de manœuvre (102) présentant les particularités suivantes :
un écran tactile (110) pourvu d'un actionneur (702) pour générer un retour de force et/ou d'un capteur de force (704) pour détecter une force de manœuvre (F) exercée sur l'écran (110) lorsque l'écran (110) est touché ; et
un appareil de commande (112) selon la revendication 8.

10. Programme informatique qui est réalisé pour exécuter et/ou piloter le procédé (800) selon l'une quelconque des revendications 1 à 7 lorsque le programme informatique est exécuté sur un ordinateur.

11. Support de stockage lisible par machine, sur lequel est stocké le programme informatique selon la revendication 10.
